# EUROPEAN PATENT SPECIFICATION

(11) **EP 1 672 207 B1**
(45) Date of publication and mention of the grant of the patent: **15.02.2012**
(21) Application number: 04747407.7
(22) Date of filing: 12.07.2004
(51) Int. Cl.: F01N 3/033, F01N 13/18

(54) **SUPPORT STRUCTURE FOR MUFFLER**
STÜTZKONSTRUKTION FÜR DÄMPFER
STRUCTURE DE SUPPORT POUR SILENCIEUX

(30) Priority: 08.10.2003 JP 2003349271
(43) Date of publication of application: 21.06.2006
(73) Proprietor: Hino Motors, Ltd., Hino-shi, Tokyo 191-8660 (JP)
(72) Inventor: TONGU, Hirofumi; c/o Hino Motors, Ltd., Tokyo 1918660 (JP); KIMURA, Masahiro; c/o Hino Motors, Ltd., Tokyo 1918660 (JP)
(74) Representative: Köhler, Walter
(86) International application number: PCT/JP2004/009941
(87) International publication number: WO 2005/035966

(56) References cited:
- DE-U1- 8 716 385
- GB-A- 2 322 816
- JP-A- 2003 172 119
- JP-U- 6 073 328

## Description

### Technical Field

The present invention relates to a support structure for a muffler with a particulate filter stored inside, which makes it possible to properly detach or attach the particulate filter.

### Background Art

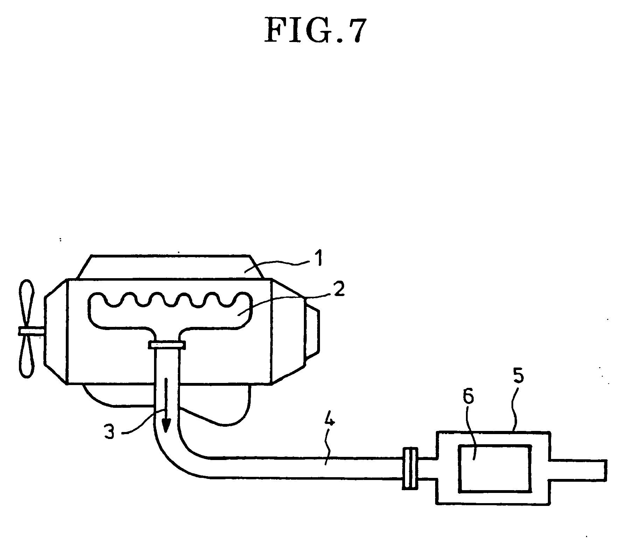

Particulates or particulate matter entrained in exhaust gas from a diesel engine is mainly constituted by carbonic soot and a soluble organic faction (SOF) of high-boiling hydrocarbon and contains a trace of sulfate (misty sulfuric acid fraction). In order to suppress the particulates from being diffused into atmosphere, it has been conceived as shown in Fig. 7 that a particulate filter 6 is incorporated in an exhaust pipe 4 into which exhaust gas 3 is introduced from a diesel engine 1 via exhaust manifold 2 (see, for example, Reference 1).

It has been proposed that this kind of particulate filter 6 is fitted by storing it in a muffler 5 for improved mountability to a vehicle since a new space is hardly available in the vehicle for arrangement of the filter 6.

On the other hand, conventionally, the muffler 5 is suspended from and supported by a vehicle body as shown in Figs. 1 and 2 in such a manner that a bracket 7 is welded to an upper peripheral portion of the muffler 5, the bracket 7 being suspended from and supported by a frame 9 via, for example, a stay 8; alternatively, as shown in Figs. 3 and 4, the muffler 5 is encircled and held by a U-bolt 10, the U-bolt 10 being suspended from and supported by the frame 9 via, for example, the stay 8 (see, for example, Reference 2).
[Reference 1] JP 2003-65032A
[Reference 2] Japanese Utility Model Publication 6-83914
Document DE8716385 U discloses a muffler with a particulate filter located inside the muffler housing and with a removable cover for discounting and mounting the filter element.

### Summary of the Invention

### Problems to be Solved by the Invention

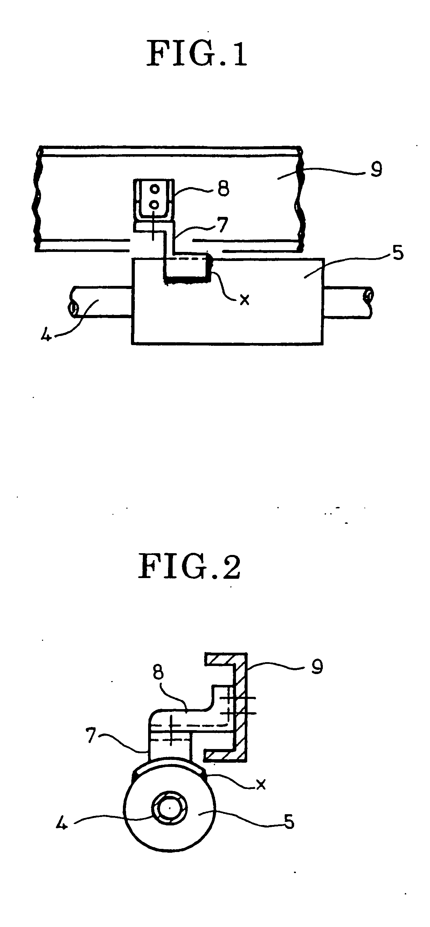

However, in the former conventional structure shown in Figs. 1 and 2, the bracket 7 has to be conformed at its lower end with the outer periphery of the cylindrical muffler 5 for welding, which causes the bracket 7 to have a curvature complementary with the outer periphery of the muffler 5, resulting in problems, i.e., expensive modeling fee and increased manufacturing cost. There is also a problem that stress concentration tends to occur at weld boundaries x.

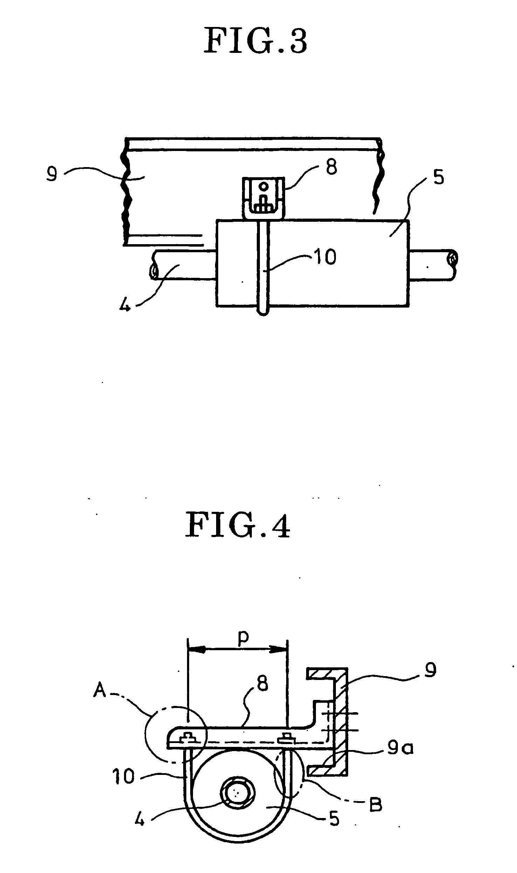

On the other hand, in the latter conventional structure shown in Figs. 3 and 4, opposite ends of the U-bolt 10 fastened to the stay 8 are required to have a pitch p longer than a diameter of the muffler 5, so that tip ends of the stay 8 are largely protruded as shown by A in the figure and tend to a problem of interference with peripheral devices. The ends of the stay 8 are largely protruded also for a reason that the muffler 5 has to be suspended and supported in a sufficiently spaced-apart relationship from the frame 9 so as to prevent interference between a vertical extension of the U-bold 10 shown by B in the figure and a lower flange 9a of the frame 9.

When the particulate filter 6 is fitted in such muffler 5 as mentioned above, unburned ash deriving from lubricant and generated during combustion within cylinders is gradually accumulated in the filter 6, which necessitates direct cleaning such as air cleaning or water washing of the filter 6 or replacement with a new particulate filter 6. However, there have been no such particular structures proposed up to the present for satisfactory support of the muffler 5 with particulate filter 6 being detachable and attachable and without the conventional problems.

The invention was made in view of the above and has its object to provide a support structure for a muffler with a particulate filter stored inside and properly detachable and attachable, which is low in manufacturing cost, hardly causes stress concentration and readily prevents interference with peripheral devices.

### Means or Measure for Solving the Problems

The invention is directed to a support structure for a muffler with a particulate filter stored inside, the muffler being divided, at positions in front of and behind the stored filter, into portions, said divided portions being fastened together through flanges thereof for easy detachment and attachment, characterized in that brackets for suspension and support of the muffler from and by a vehicle body are also fastened together upon fastening of the flanges.

Thus, the brackets may be simplified in shape to an extent that they may be fastened together upon fastening of the flanges. Unlike conventional ones, the brackets do not need to be conformed with an outer periphery of a muffler, resulting in cheap modeling fee and decreased manufacturing cost. Moreover, they need no welding, which preliminarily prevents the problem of stress concentration tending to occur upon welding.

Furthermore, for fastening of the brackets together with the flanges, relatively small fastening regions each of the order within the diameter of a muffler will suffice. As a result, for suspension and support of the bracket from and by a vehicle body, no stays with larger projections will be required unlike a conventional support using a U-bolt; relatively short stays will suffice for suspension and support from and by a vehicle body, readily preventing interference with peripheral devices.

When the invention is to be carried out more concretely, for example, each of the brackets may have a lower end formed with an overlap portion for overlapping with corresponding ones of the flanges only at portions thereof adjacent to their tops. The overlap portion is fastened together with the flanges at a position adjacent to the tops of the flanges.

In the invention, the particulate filter may carry oxidation catalyst; the particulate filter may carry NOₓ absorption reduction catalyst.

### Effects of the Invention

The following various, excellent effects and advantages will be obtainable according to a support structure for a muffler of the invention.

(1) The brackets may be simplified in shape so that modeling fee for the brackets may be cheap to decrease the manufacturing cost. Furthermore, no welding is employed for fitting of the brackets so that preliminarily prevented is a problem on mechanical strength that stress concentration tends to occur at weld boundaries, thereby providing the support structure with which stress concentration hardly occurs.

(II) Relatively small fastening regions are required for fastening of the brackets together with the flanges, which makes it unnecessary to use stays with larger protrusions for suspension and support of the brackets from and by the vehicle body. This can readily prevent interference with the peripheral devices and can substantially relieve restrictions on layout of the muffler and peripheral devices.

### Brief Description of the Drawings

[Fig. 1] A side view showing an example of conventional support structures for mufflers.
[Fig. 2] A front view of the support structure shown in Fig. 1.
[Fig. 3] A side view showing another example of the conventional support structures for mufflers.
[Fig. 4] A front view of the support structure shown in Fig. 3.

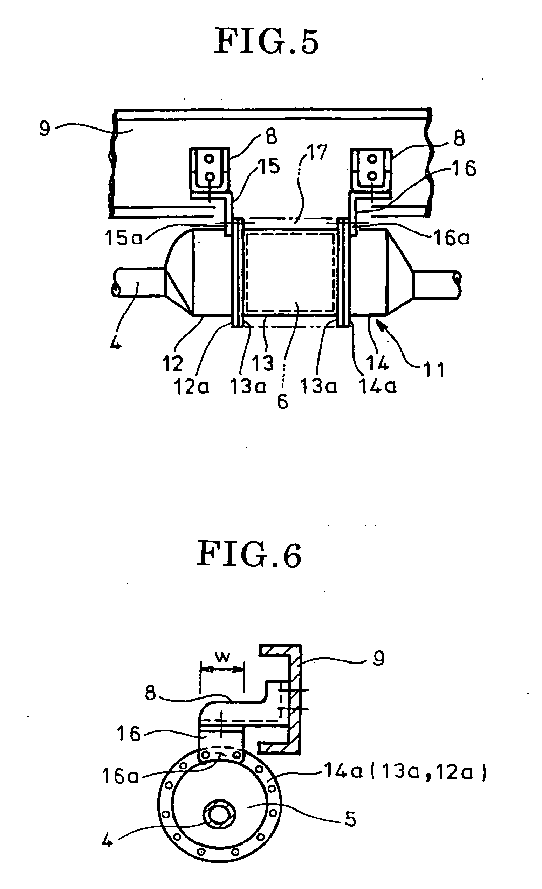

[Fig. 5] A side view showing an embodiment of the invention.
[Fig. 6] A front view of the support structure shown in Fig. 5.
[Fig. 7] A schematic view showing an example of an arrangement of a particulate filter.

### Explanation of the Reference Numerals

- 4: exhaust pipe
- 6: particulate filter
- 9: frame (vehicle body)
- 11: muffler
- 12: front portion
- 12a: flange
- 13: intermediate portion (portion for storage of the particulate filter)
- 13a: flange
- 14: rear portion
- 14a: flange
- 15: bracket
- 15a: overlap portion
- 16: bracket
- 16a: overlap portion

### Best Mode for Carrying Out the Invention

An embodiment of the invention will be described with reference to the drawings.

Figs. 5 and 6 show an embodiment of the invention. In the embodiment illustrated, a catalytic regeneration type particulate filter 6 integrally carrying oxidation catalyst is stored inside of a muffler 11 incorporated in an exhaust pipe 4.

The particulate filter 6 comprises a porous honeycomb structure made of ceramics with grid-like compartmentalized passages. Alternate ones of the passages have plugged one ends and the remaining passages with unplugged one ends have the plugged other ends such that only exhaust gas 3 passing through porous thin walls which compartmentalize the respective passages is discharged downstream.

Oxidation reaction of particulates captured by inside surfaces of the porous thin walls in the particulate filter 6 is accelerated by the oxidation catalyst so that the particulates are ignited and burned even at relatively low temperatures; gradually accumulated within the filter 6 is ash deriving from lubricant and generated in combustion within cylinders, resulting in requirement of direct cleaning such as air cleaning or water washing of the filter 6 or replacement into a new particulate filter 6.

To this end, employed in the embodiment is a structure such that the muffler 11 is divided into three, i.e., front, intermediate and rear portions 12, 13 and 14, the portions being detachably fastened together through flanges 12a, 13a and 14a by bolts and nuts, the intermediate portion 13 being the portion for storage of the particulate filter 6. The particulate filter 6 can be properly taken out wholly together with the intermediate portion 13 for its cleaning or replacement.

Front and rear joints comprising flanges 12a, 13a and 14a are fastened together with angled brackets 15 and 16 by bolts and nuts, the brackets 15 and 16 being suspended and supported from and by the frame 9 through stays 8 extending therefrom.

More specifically, the brackets 15 and 16 have lower ends formed with overlap portions 15a and 16a overlapped with the flanges 12a, 13a and 14a only at position adjacent to tops thereof. The brackets 15 and 16 are fitted by fastening them together with the flanges 12a, 13a and 14a at position adjacent the tops thereof.

In Fig. 5, reference numeral 17 denotes heat insulation material which surrounds an outer periphery of an intermediate portion of the muffler 11 so as to maintain the particulate filter 6 at temperature as high as possible.

Thus, the support structure for the muffler 11 constructed in this manner makes it possible to simplify the brackets 15 and 16 in shape to an extent fastenable together with the flanges 12a, 13a and 14a upon fastening of the flanges; the brackets are not needed to be conformed with the outer periphery of the muffler 11 unlike the prior art, so that modeling fee is cheap to decrease the manufacturing cost. Moreover, no welding is employed so that preliminarily prevented is a problem that stress concentration tends to occur at weld boundaries.

Furthermore, for fastening of the brackets 15 and 16 together with the flanges 12a, 13a and 14a, relatively small regions to an extent within a diameter of the muffler 11 suffice, which makes it unnecessary to use stays 8 with larger protrusions required in the conventional structures using U-bolts for suspension and support of the brackets 15 and 16 from and by the frame 9 (vehicle body); the brackets may be suspended and supported from and by the frame 9 via the relatively short stays 8, which can readily prevent interference with the peripheral devices.

Thus, according to the above-mentioned embodiment, the brackets 15 and 16 may be simplified in shape so that modeling fee for the brackets 15 and 16 may be cheap to decrease the manufacturing cost. Furthermore, no welding is employed for fitting of the brackets so that preliminarily prevented is a problem on mechanical strength that stress concentration tends to occur at weld boundaries, thereby providing the support structure with which stress concentration hardly occurs.

Relatively small fastening regions are required for fastening of the brackets 15 and 16 together with the flanges 12a, 13a and 14a, which makes it unnecessary to use stays 8 with larger protrusions for suspension and support of the brackets 15 and 16 from and by the frame 9. This can readily prevent interference with the peripheral devices and can substantially relieve restrictions on layout of the muffler 11 and the peripheral devices.

### Industrial Applicability

It is to be understood that the muffler support structure is not limited to the above-mentioned embodiment and that various changes and modifications may be effected within the gist of the invention. For example, the muffler may be of any shape such as of oval section other than cylindrical. The particulate filter may not necessarily have oxidation catalyst. In lieu of oxidation catalyst, the filter may carry NOₓ absorption reduction catalyst so as to attain concurrent reduction of particulate and NOₓ.

## Claims

1. A support structure for a muffler (11) with a particulate filter (6) stored inside, the muffler (11) being divided, at positions in front of and behind the stored filter (6), into three, namely, front, intermediate and rear portions (12, 13, 14), **characterized in that** said divided portions (12, 13, 14) being fastened together through flanges (12a, 13a, 14a) thereof for easy detachment and attachment, comprising a pair of brackets (15, 16) for suspension and support of the muffler (11) from and by a vehicle body (9), said brackets (15, 16) fitted by fastening said brackets (15, 16) together upon fastening of the flanges (12a, 13a, 14a) by bolts and nuts at front and rear joints of said muffler.

2. The support structure for the muffler (11) according to claim 1, wherein each of the brackets (15, 16) has a lower end formed with an overlap portion (15a, 16a) for overlapping with corresponding ones of the flanges (12a, 13a, 14a) only at portions thereof adjacent to their tops, said brackets (15, 16) being fitted by fastening the overlap portion (15a, 16a) together with the flanges (12a, 13a, 14a) at a position adjacent to the tops of the flanges (12a, 13a, 14a).

3. The support structure for the muffler (11) according to claim 1, wherein the particulate filter (6) carries oxidation catalyst.

4. The support structure for the muffler (11) according to claim 2, wherein the particulate filter (6) carries oxidation catalyst.

5. The support structure for the muffler (11) according to claim 1, wherein the particulate filter (6) carries NOₓ absorption reduction catalyst.

6. The support structure for the muffler (11) according to claim 2, wherein the particulate filter (6) carries NOₓ absorption reduction catalyst.

## Patentansprüche

1. Trägerstruktur für einen Schalldämpfer (11) mit einem Partikelfilter (6), der innen angebracht ist, wobei der Schalldämpfer (11) an Stellen vor und hinter dem angebrachten Filter (6) in drei Abschnitte, nämlich in einen vorderen, einen mittleren und einen hinteren Abschnitt (12, 13, 14), geteilt ist, **dadurch gekennzeichnet, dass** die geteilten Abschnitte (12, 13, 14) für ein einfaches Lösen und Anbringen durch ihre Flansche (12a, 13a, 14a) aneinander befestigt sind, mit einem Paar Klammern (15, 16) für die Aufhängung und Unterstützung des Schalldämpfers (11) an und durch eine Fahrzeugkarosserie (9), wobei die Klammern (15, 16) durch das Befestigen der Klammern (15, 16) aneinander beim Befestigen der Flansche (12a, 13a, 14a) durch Schrauben und Muttern an vorderen und hinteren Verbindungsstellen des Schalldämpfers angebracht werden.

2. Trägerstruktur für den Schalldämpfer (11) nach Anspruch 1, wobei jede der Klammern (15, 16) ein unteres Ende mit einem Überlappungsabschnitt (15a, 16a) zum Überlappen mit Entsprechenden der Flansche (12a, 13a, 14a) lediglich an ihren Abschnitten, die zu ihren Oberseiten benachbart sind, aufweist, wobei die Klammern (15, 16) durch Befestigen des Überlappungsabschnitts (15a, 16a) zusammen mit den Flanschen (12a, 13a, 14a) an einer Position, die zu den Oberseiten der Flansche (12a, 13a, 14a) benachbart ist, angebracht werden.

3. Trägerstruktur für den Schalldämpfer (11) nach Anspruch 1, wobei der Partikelfilter (6) einen Oxidationskatalysator enthält.

4. Trägerstruktur für den Schalldämpfer (11) nach Anspruch 2, wobei der Partikelfilter (6) einen Oxidationskatalysator enthält.

5. Trägerstruktur für den Schalldämpfer (11) nach Anspruch 1, wobei der Partikelfilter (6) einen NOₓ-Absorptions-Reduktionskatalysator enthält.

6. Trägerstruktur für den Schalldämpfer (11) nach Anspruch 2, wobei der Partikelfilter (6) einen NOₓ-Absorptions-Reduktionskatalysator enthält.

## Revendications

1. Structure de support destinée à un silencieux (11), ayant un filtre à particules (6) stocké à l'intérieur de celui-ci, le silencieux (11) étant divisé, à des positions à l'avant et à l'arrière du filtre stocké (6), en trois parties, à savoir, les parties avant, intermédiaire et arrière (12, 13, 14), **caractérisée en ce que** lesdites parties divisées (12, 13, 14) étant fixées ensemble par l'intermédiaire de brides (12a, 13a, 14a) de celles-ci en vue d'une désinstallation et d'une installation aisées, comprenant une paire de pattes d'attache (15, 16) destinées à suspendre et supporter le silencieux (11) à partir et par l'intermédiaire d'une caisse de véhicule (9), lesdites pattes d'attache (15, 16) étant installées par la fixation desdites pattes d'attache (15, 16) ensemble lors de la fixation des brides (12a, 13a, 14a) par l'intermédiaire de boulons et d'écrous au niveau des assemblages avant et arrière dudit silencieux.

2. Structure de support destinée au silencieux (11) selon la revendication 1, dans laquelle chacune des pattes d'attache (15, 16) présente une extrémité inférieure formée d'une partie en chevauchement (15a, 16a) destinée à chevaucher les brides correspondantes parmi les brides (12a, 13a, 14a) uniquement au niveau des parties de celles-ci adjacentes à leurs parties supérieures, lesdites pattes d'attache (15, 16) étant installées par la fixation de la partie en chevauchement (15a, 16a) avec les brides (12a, 13a, 14a), à une position adjacente aux parties supérieures des brides (12a, 13a, 14a).

3. Structure de support destinée au silencieux (11) selon la revendication 1, dans laquelle le filtre à particules (6) contient un catalyseur par oxydation.

4. Structure de support destinée au silencieux (11) selon la revendication 2, dans laquelle le filtre à particules (6) contient un catalyseur par oxydation.

5. Structure de support destinée au silencieux (11) selon la revendication 1, dans laquelle le filtre à particules (6) contient un catalyseur de réduction de NOₓ par absorption.

6. Structure de support destinée au silencieux (11) selon la revendication 2, dans laquelle le filtre à particules (6) contient un catalyseur de réduction de NOₓ par absorption.
